# EUROPÄISCHE PATENTSCHRIFT

(11) **EP 0 525 022 B1**
(45) Veröffentlichungstag und Bekanntmachung des Hinweises auf die Patenterteilung: **19.07.1995**
(21) Anmeldenummer: 91907707.3
(22) Anmeldetag: 19.04.1991
(51) Int. Cl.: A23L 3/36, F25D 17/00

(54) **VERFAHREN UND VORRICHTUNG ZUM LAGERN VON LEBENSMITTELN, PFLANZEN, FLEISCH UND SONSTIGEN ORGANISCHEN STOFFEN**
PROCESS AND DEVICE FOR STORING FOODSTUFFS, PLANTS, MEAT AND OTHER ORGANIC SUBSTANCES
PROCEDE ET DISPOSITIF DE STOCKAGE DE DENREES ALIMENTAIRES, DE PLANTES, DE VIANDE ET D'AUTRES SUBSTANCES ORGANIQUES

(30) Priorität: 20.04.1990 HU 248990
(43) Veröffentlichungstag der Anmeldung: 03.02.1993
(73) Patentinhaber: SUBOTICS, Gyula, H-1172 Budapest (HU); REPNIK, Claus, A-8280 Fürstenfeld (AT)
(72) Erfinder: SUBOTICS, Gyula, H-1172 Budapest (HU); SUBOTICS, Gyuláné, H-1172 Budapest (HU)
(74) Vertreter: Viering, Jentschura & Partner
(86) Internationale Anmeldenummer: HU9100015
(87) Internationale Veröffentlichungsnummer: WO9115970

(56) Entgegenhaltungen:
- EP-A- 0 336 791
- EP-A- 0 345 437
- DE-C- 2 807 352
- US-A- 4 662 186
- Patent abstracts of Japan, unexamined applications, section C, volume 11, n 232, 29 July 1987, The patent Office Japanese Government, see page 23 C 437, ref. n 62-44155 (Ulvac Corp.)

## Beschreibung

Die Erfindung betrifft ein Verfahren und eine Vorrichtung zum Lagern von Lebensmitteln, Pflanzen, Fleisch und sonstigen organischen Stoffen, wobei das zu lagernde Produkt in eine hermetisch abschließbare, gekühlte Kammer gelegt wird, die geöffnet werden kann.

Es ist allgemein bekannt, daß die in den Haushaltskühlschränken gelagerten Lebensmittel in Abhängigkeit von der jeweiligen Art der Lebensmittel auch nach Ablauf von mehreren Tagen verwendbar sind. Die Lagerungszeit der einzelnen Produkte, während der noch keine. Qualitätsverschlechterung eintritt, hängt unmittelbar von dem Wärmeabzug durch die Umgebung ab, d.h. von dem Maß der Abkühlung der Produkte. Bei Temperaturen über 0 °C sind Produkte pflanzlicher oder tierischer Herkunft nur kurzzeitig ohne Qualitätsverminderung lagerbar. Zum Beispiel werden frischer Salat und Radieschen nach einer Lagerung von 1-2 Tagen auf den offenen Regalen herkömmlicher Kühlschränke welk und somit unbrauchbar. Bei Temperaturen unter 0 °C, insbesondere in Kühltruhen, in denen die Temperatur im allgemeinen bei -18 °C oder gegebenenfalls darunter liegen, kann die Lagerungszeit gewisser Lebensmittel sogar ein Jahr erreichen. Bei diesen Tiefkühl- oder Schnellkühlverfahren kann jedoch die Schädigung der Zellen nicht vollkommen ausgeschlossen werden, die sichtbar in der nach dem Auftauen bemerkbaren großen Qualitätsverminderung in Erscheinung tritt. Bei den bisher bekannten Kühlvorrichtungen wird die Temperatur der Kammern im allgemeinen unmittelbar mit der Temperatur der den Verdampfer des Kühlkreises enthaltenden Kühlplatte eingestellt, was den Nachteil ergibt, daß, da die Kühlplatte nicht die gesamte Innenfläche der Kammer abdeckt sondern nur einen kleinen Teil dieser, innerhalb der Kammer Flächenteile mit verschiedenen Temperaturen vorhanden sind. So weist zum Beispiel die Fläche der Kühlplatte im allgemeinen eine geringere Temperatur auf als die weiteren Teile der Innerfläche der Kammer. Da jedoch das Ein- und das Ausschalten des Kühlkreises einander zyklisch folgen, folgen in dem Verdampfer einander zyklisch auch die Abkühlungen und Aufwärmungen, somit ändert sich auch die Temperatur der Fläche der Kühlplatte in Abhängigkeit von der Zeit. Messungen haben ergeben, daß die Temperaturänderungen innerhalb der Kammer räumlich und Zeitlich sogar 4-5 °C überschreiten können. In Folge der unterschiedlichen Temperaturen bzw. der unterschiedlichen Temperaturänderungen der einzelnen Flächenteile bilden sich in dem Innenraum Luftströmungen aus, die die Verdunstung (Verdampfung) des Wassergehaltes in den Zellen der gelagerten Produkte, und somit das Austrocknen der Produkte fördern.

Wegen der derartig großen Temperaturänderungen wird bei den bekannten Kühlschränken, Kühlverfahren in den zur Aufbewahrung der verschiedenen Lebensmittel, insbesondere Gemüse, Obst usw. dienenden Kammern die Durchschnittstemperatur im allgemeinen auf 3-4 °C eingestellt, wodurch Sichergestellt wird, daß die Temperatur innerhalb der Kammer nicht unter 0 °C absinkt. Im Falle eines Absinkens der Temperatur unter 0 °C sind nämlich die Zellen durch die Gefahr des Einfrierens einer bedeutenden Beschädigung ausgesetzt und dadurch können die Lebensmittel in kurzer Zeit für den Verzehr ungeeignet werden.

Da der Stoffwechsel der Zellen der einzelnen Lebensmittel, insbesondere Gemüse, Obst bei einer Temperatur von 3-4 °C bereits bedeutend ist, altern die Zellen bei einer derartigen Lagerungstemperatur innerhalb kurzer Zeit (in Abhängigkeit von der Zellensorte innerhalb einiger Tage), die sich an den Lebensmitteln ansammelnden Viren, Bakterien, usw. vermehren sich, wodurch sich die Qualität der Lebensmittel weiter verschlechtert.

Die aus der HU-PS 185 130 bekannte Kühlvorrichtung weist einen mit Kammern und einem einzigen Kompressor versehenen Kühlkreis auf, wobei die Kammern voneinander unabhängig geregelte unterschiedliche Temperaturen aufweisen, wobei in dem mit Kapillaren versehenen primären Kühlkreis mehrere Verdampfer ausgebildet sind und ein sekundärer Kühlkreis ausgebildet ist, der aus einem Verflüssiger (Kondensationsgerät) und einem Verdampfer besteht. Da bei dieser bekannten Kühlvorrichtung die Kammern der Kühlvorrichtung mittels der den Verdampfer aufweisenden Kühlplatten gekühlt werden, bestehen bei dieser Lösung die für die mit Kühlplatten versehenen Lösungen charakteristischen Nachteile, die bereits oben näher erläutert wurden.

Bei den oben offenen Kühlpulten ist ein den Boden und die beiden gegenüberliegenden Seitenwände des Kühlpultes umfassender U-förmiger Luftgang um den Kühlraum herum ausgebildet, durch den die von Außen eingesaugte und im allgemeinen mittels einer am Unterteil des Kühlpultes angeordneten Kühlrohrschlange gekühlte Luft strömt. Eine derartige Lösung ist zum Beipsiel aus der HU-PS 182 163 bekannt, bei welcher das Kühlpult und das Betriebsverfahren mit einem automatischen Abtausystem versehen ist. Dabei läßt der Lüfter im Kühlbetrieb die über die an den Enden des Luftganges befindlichen Öffnungen eingesaugte Luft nach vorn in Richtung der Kühlrohrschlangen strömen. Bei im bestimmten Maße erfolgter Eisbildung schaltet das System auf Abtaubetrieb um.

Bei dieser Betriebsweise läßt der Lüfter die Luft in entgegensetzte Richtung in dem Luftgang strömen und saugt aus dem das Kühlpult umgebenden Luftraum Umgebungsluft ein. Da die Temperatur der Umgebungsluft höher als die der gekühlten Luft ist, wird somit das System enteist. Bei dieser Lösung, die einerseits durch den offenen Deckel gekennzeichnet ist, wodurch die Einwirkungen der Umgebungsluftströmungen nicht vermieden werden können, desweiteren die aus der Umgebung eingesaugte und entlang der drei Seiten des Kühlpultes (entlang der zwei Seiten und des Bodens) strömende Luft die auf der Einsaugseite des Kühlpultes befindliche Seite des Kühlpultes ständig aufwärmt und nur den unteren Teil des Kühlpultes und die gegenüberliegende Seite, d.h. die Seite, an der die Luft ausströmt kühlt, ändert sich die Temperatur des Lagerraumes in Abhängigkeit von der Zeit und dem Raum bedeutend. Somit können auch bei derartigen Kühlpulten die Bedingungen zur idealen Lagerung (Konservierung) nicht Sichergestellt werden, gemäß welchen eine im Raum und in der Zeit konstante Temperatur eingehalten werden soll. Infolgedessen werden derartige Kühlpulte in erster Linie in einem Temperaturbereich unter 0 °C betrieben und hauptsächlich zur Lagerung von tiefgefrorenen Lebensmitteln verwendet.

Aus der in Grossbritannien unter der Nummer 2221377A am 7. Februar 1990 veröffentlichen Patentanmeldung sind ein Verfahren und eine Vorrichtung zum Konservieren von Pflanzen, Fleisch oder sonstigen organischen Stoffen bekannt.

Bei Anwendung dieser Lösung sind auch solche organischen Stoffe konservierbar, zu deren Konservierung andere Verfahren nicht geeignet sind (zum Beispiel Konservierung von für Organtransplantationen verwendeten Organen, usw.). Dieses bekannte Verfahren ist auch vorzugsweise in Gebieten verwendbar, in denen eine kontinuierliche Versorgung nicht Sichergestellt ist oder das Versorgungsnetz noch nicht ausgebaut ist und somit die kontinuierliche Heranschaffung der Lebensmittel nur von dem Wohnort weit entfernt möglich ist. Bei derartigen Versorgungsverhältnissen kann es von Vorteil sein, daß die einzelnen Lebensmittel für eine längere Zeitdauer in den Haushalten unter Bewahrung der guten Qualität gelagert werden können.

In größeren Siedlungen, in den Städten der entwickelten Industrieländer ist jedoch im allgemeinen eine kontinuierliche Warenversorgung Sichergestellt. Hier besteht die Aufgabe in der Sicherung einer solchen Lagerung, bei welcher die gute Qualität der Produkte für 1-2 oder eventuell sogar 3 Wochen erhalten bleibt, so daß der Verbraucher nicht gezwungen ist, sich tagtäglich mit der Beschaffung (dem Einkauf) von Lebensmitteln zu beschäftigen, sondern es ausreichend ist, die in seinem Haushalt zur Verfügung stehende Lagerkapazität einmal wöchentlich oder jede zweite oder dritte Woche durch einen Großeinkauf zum Beispiel in Großmärkten (gegebenenfalls bei größeren Mengen zu günstigen Preisen) aufzufüllen.

Die Aufgabe der Erfindung besteht in der Entwicklung eines solchen Kühlverfahrens und einer Vorrichtung, mittels welcher die Lagerungszeit von Lebensmitteln, Pflanzen, Fleisch oder sonstigen organischen Stoffen ohne bedeutenden Kostenzuschlag auf mindestens das Doppelte der durch die herkömmlichen Haushaltskühlschränke gewährleisteten Lagerungszeit erhöht werden kann.

Die Erfindung beruht auf der Erkenntnis, daß die Lagerungszeit der Lebensmittel, und insbesondere der Pflanzen ohne Qualitätsverminderung verdoppelt oder bei bestimmten Produkten sogar vervielfacht werden kann, wenn der Stoffwechsel und die Verdunstung des Wassergehaltes der Zellen der zu lagernden Produkte durch Sicherstellung entsprechender Temperatur- und Verdunstungsverhältnisse während der Zeitdauer der Lagerung auf ein Minimum reduziert werden.

Die gestellte Aufgabe wird durch ein Verfahren zum Lagern von Lebensmitteln, Pflanzen, Fleisch und sonstigen organischen Stoffen gelöst, bei welchem gemäß der Erfindung auf die Weise vorgegangen wird, daß die geschlossene Kammer von Außen von einer in einem geschlossenen Raum befindlichen Flüssigkeit umgeben wird, wobei die Temperatur der frostbeständigen Flüssigkeit intermittierend oder kontinuierlich gemessen wird und die frostbeständige Flüssigkeit mittels eingefügtem Thermostat und Kühlkreis mit Hilfe einer außerhalb des geschlossenen Raumes angeordneten Kühlplatte zwischen vorgegebene Temperaturgrenzen, die in einem Temperaturbereich von +3°C und -3 °C liegen, gekühlt wird, wobei die obere und die untere Temperaturgrenze in Abhängigkeit von der Dicke der Wand der Kammer, den Wärmeleitungseigenschaften des Materials der Wand der Kammer, der Zykluszeit zwischen dem Einschalten und dem Ausschalten des Kühlkreises, der Temperaturänderung und der spezifischen Wärme des die die Kammer begrenzenden Flächen umgebenden Mediums, dem Volumen des die die Kammer begrenzenden Flächen umgebenden geschlossenen Raumes, und der Wärmeisolierung der Außenwand des geschlossenen Raumes auf die Weise gewählt wird, daß jeder Teil der Innenfläche der Kammer auf einem in dem Temperaturbereich von +0,5 °C bis -0,5 °C liegenden im Raum und in der Zeit konstanten Temperaturwert, vorzugsweise auf einem 0 °C annähernden Temperaturwert gehalten wird und die Temperatur der die geschlossene Kammer von außen umgebenden frostbeständigen Flüssigkeit und die Außenfläche des geschlossenen Raumes auf einem Wert innerhalb der angegebenen Temperaturgrenzen gehalten wird, wobei die frostbeständige Flüssigkeit kontinuierlich oder intermittierend in dem geschlossenen Raum durch Gravitation oder mittels einer Pumpe um die Kammer in Zirkulations gebracht wird.

Das Wesen der Erfindung besteht also darin, daß die zu lagernden Produkte in solchen geschlossenen Kammern (geschlossenen Schubfächern) angeordnet werden, in denen die Temperatur der inneren Lufträume in allen Richtungen und in der Zeit ständig auf einem 0 °C am besten annähernden Wert gehalten werden kann und die die lagernden Räume begrenzenden Flächen an jedweder Stelle die Temperatur der inneren Lufträume am besten annähern.

Dadurch kann das Verdampfen des Wassergehaltes von zum Beispiel pflanzlichen Zellen auf ein Minimum reduziert werden und deren Verwelken, und Austrocknen können Zeitlich bedeutend verzögert werden. Gleichzeitig verlangsamt sich der Stoffwechsel der Zellen mit Verringerung der Temperatur, wodurch sich die Alterung in der Zeit verschiebt. Da sich die Temperatur nicht in bedeutendem Maße unter 0 °C verringert, sind die Zellen nicht der Beschädigung durch Gefrieren ausgesetzt.

Die Erfindung betrifft weiterhin eine Vorrichtung zum Lagern von Lebensmitteln, Pflanzen, Fleisch und sonstigen organischen Stoffen, die mindestens eine das zu lagernde Produkt aufnehmende mittels eines zu öffnenden Abschlußdeckels hermetisch abschließbare gekühlte Kammer aufweist, wobei gemäß der Erfindung die Kammer und der Abschlußdeckel durch Doppelwände begrenzt sind, wobei die Doppelwände der Kammer und des Abschlußdeckels jeweils gekühlte Zusammenhängende geschlossene Räume umschließen, die miteinander in wärmeleitender Verbindung stehen, daß die Innenwand/Innenwände der Doppelwand vorzugsweise aus Kunststoff ist/sind, die Außenwand der Doppelwände dagegen von außen her von einer Wärmeisolierung umgeben ist, wobei die geschlossenen Räume mit einer zirkulierenden frostbeständigen Flüssigkeit gefüllt sind.

Vorzugsweise sind die Doppelwände der Kammer und des Abschlußdeckels mit einer wärmeleitenden Fläche versehen, die in geschlossenem Zustand miteinander in Kontakt stehen und die von der Innenwand der Doppelwände in Richtung zu dem zu lagernden Produkt abgedeckt sind.

Es ist zweckmäßig, wenn die wärmeleitende Fläche der Kammer mit einer Kühlplatte in wärmeleitender Verbindung steht. Vorzugsweise sind die von den Doppelwänden der Kammer und des Abschlußdeckels umschlossenen geschlossenen Räume über flexible Rohre miteinander verbunden.

Es ist weiterhin zweckmäßig, wenn die Kammer mit mit dem Abschlußdeckel gemeinsam herausziehbaren, bzw. einschiebbaren Schubfächern versehen ist, die ebenfalls von einer vorzugsweise einen geschlossenen Raum bildenden Doppelwand zumindestens teilweise umgeben sind.

Eine andere vorteilhafte Ausführungsform der erfindungsgemäßen Vorrichtung ist mit einer Pumpe versehen, die die in den durch die Doppelwände umschlossenen zusammenhängenden geschlossenen Räumen befindliche frostbeständige Flüssigkeit zirkulieren läßt.

Die Erfindung betrifft weiterhin eine Vorrichtung zum Lagern von Lebensmitteln, Pflanzen, Fleisch und sonstigen organischen Stoffen, die mit mindestens einer das zu lagernde Produkt aufnehmenden, mit einem zu öffnenden, Abschlußdeckel hermetisch abschließbaren, gekühlten Kammer versehen ist, wobei gemäß der Erfindung die Innenfläche des Abschlußdeckels zumindest teilweise mit einem wärmeleitenden Material bedeckt ist, dessen Außenfläche mit einer Wärmeisolierung versehen ist, wobei die die Kammer begrenzenden weiteren Wände zumindest teilweise Doppelwände sind, die mit dem wärmeleitenden Material des Abschlußdeckels in wärmeübertragender Verbindung stehen, daß weiterhin der/die von den Doppelwänden umschlossene Raum/Räume mit einer zirkulierenden frostbeständigen Flüssigkeit gefüllt ist/sind, wobei die Innenwand der Doppelwand vorzugsweise aus Kunststoff besteht.

Es ist vorteilhaft, wenn das wärmeleitende Material des Abschlußdeckels von einer Metallplatte, vorzugsweise Kupferplatte oder Aluminiumplatte gebildet ist, deren Innenseite mit einer Farbschicht oder dünnen Kunststoffschicht versehen ist und deren Außenseite mit Verdickungen, vorzugsweise Rippungen und einer Wärmeisolierung versehen ist. Die Rippungen können zum Beispiel gitterartig ausgebildet sein. Durch diese Verdickungen wird die Wärmeleitung verbessert.

Die erfindungsgemäße Vorrichtung kann vorzugsweise durch Umänderung der Speicherzentren herkömmlicher Kühlschränke (Kühlanlagen) auf die Weise realisiert werden, daß in dem Kühlraum gesonderte, vorzugsweise mit Kunststoffwänden umschlossene und mittels ebenfalls aus Kunststoff gefertigten gut abschließbaren Abschlußdeckeln versehene Kammern, Schubfächer ausgebildet werden. Durch die natürliche Luftzirkulation kann erreicht werden, daß sich in den einzelnen Speicherfächern annähernd gleiche Temperaturverhältnisse ausbilden. Die Kühlung der Innenräume der Kammern, Fächer kann intensiver und gleichmäßiger gestaltet werden, wenn die natürliche Luftzirkulation des Luftraumes der durch die Doppelwände umgebenen zusammenhängenden geschlossenen Räume und dadurch die Intensität der Kühlung zum Beispiel durch zeitweise oder ständig erfolgende Betätigung eines eingebauten Ventilators gesteigert werden.

Eine noch bessere Wärmeleitung, sowie eine ständige wärmehaltung und somit ein gleichmäßigerer Wärmeentzug können dadurch erreicht werden, daß die sich zwischen den Doppelwänden ausbildenden zusammenhängenden geschlossenen Räume mit einer frostbeständigen Flüssigkeit ausgefüllt werden, deren Zirkulation entweder durch natürliche Wärmekonvektion oder durch zeitweise, bzw. kontinuierliche Betätigung einer Flüssigkeitsspumpe Sichergestellt werden kann. Dadurch kann der durch die Materialströmung erfolgende Energietransport gleichmäßiger und intensiver gestaltet werden. Somit kann Sichergestellt werden, daß nach Einstellung eines Gleichgewichtszustandes alle Punkte der Innenfläche der abgeschlossenen Kammern, Fächer die gleiche Temperatur aufweisen, wodurch sich in den Innenräumen der Kammern, Fächer keine bedeutende Luftströmung ausbilden kann. Wird nun der Innenraum der Kammern, Fächer auf eine Temperatur von annähernd 0 °C abgekühlt, so kann auch unter Berücksichtigung der Verringerung der Luftströmung die Verdampfungsgeschwindigkeit des in den Zellen des zu lagernden Produktes befindlichen Wassergehaltes bedeutend verringert werden.

Durch das neue Kühlungsverfahren wird einerseits die Temperatur des Speicherraumes verringert, wodurch sich der Stoffwechsel der Zellen des zu lagernden (speichernden) Produktes vermindert, d.h. der Alterungsprozeß der Produkte verlangsamt sich, andererseits wird durch Sicherstellung einer gleichmäßigen und konstanten Temperatur der den Speicherraum (Kammer, Fach) begrenzenden Fläche verhindert, daß der Wassergehalt der Zellen der zu lagernden Produkte verdampft und somit die Zellen der Produkte austrocknen, bzw. die Produkte verwelken und zur Ernährung ungeeignet werden.

Bei der Ausbildung der Innenwand der Doppelwände ist anstelle von Metall insbesondere die Anwendung von Kunststoff vorteilhaft, da die kalte Ausstrahlung von Kunststoff im allgemeinen geringer als die der Metalle ist und somit bei den gelagerten Produkten die Gefahr des Gefrierens beseitigt werden kann.

Die erfindungsgemäße Vorrichtung kann auch derart ausgebildet sein, daß die innere Verteilung der Kühlanlage so gewählt wird, daß gegebenenfalls auch ein Tiefkühlfach ausgebildet wird, das vorzugsweise im Sommer zur Lagerung von Eis u.dergl. verwendet werden kann. Die Kühlvorrichtung kann auch mit einem dynamisch gekühlten Teil gemäß der in der Einleitung genannten Patentanmeldung 8912681.7 (Grossbritannien) versehen sein, in dem die Möglichkeit zur bedeutend Verlängerung der Lagerungszeit geboten wird, oder aber die erfindungsgemäße Vorrichtung kann auch mit einem freien Speicherraum, bzw. offenen Fach zum Lagern von Milch, Erfrischungsgetränken, Eiern, usw. versehen sein. Desweiteren kann der Kühlraum mit zusammenhängenden, oder gesonderten, von Kunststoffwänden umgebenen, mit leicht schließbaren Kunststoffdeckeln oder Abschlußdeckeln versehenen, gegebenenfalls mit verschiedenen Abmessungen versehenen Speicherfächern versehen sein, wobei die gemeinsamen Trennwände der benachbarten Fächer, sowie die an den schrankteil des Kühlschrankes angrenzenden Seiten der Fächer vorzugsweise mit zusammenhängenden Kanälen, Hohlräumen versehen sind, in denen eine natürliche oder künstlich beschleunigte Luftzirkulation erfolgt, bzw. diese zusammenhängenden Hohlräume können auch mit einer frostbeständigen Flüssigkeit aufgefüllt sein, wobei die Zirkulation dieser Flüssigkeit ebenfalls auf natürliche Weise durch Wärmekonvektion, oder mittels einer Flüssigkeitspumpe künstlich beschleunigt erfolgen kann. Die künstliche Luft- bzw. Flüssigkeitszirkulation kann zeitweise erfolgen, wobei das Ein- und das Ausschalten von einem Relais oder einem Thermostat geregelt werden oder kontinuierlich sein kann.

Nachstehend wird die Erfindung anhand von bevorzugten Beispielen unter Bezugnahme auf die beigelegte Zeichnung ausführlicher beschrieben.

In der Zeichnung zeigen:
- **Fig.1**: die ohne Qualitätsverschlechterung gemessenen Lagerungszeiten verschiedener pflanzlicher Produkte in Abhängigkeit von der Temperatur bei Anwendung des erfindungsgemäßen Verfahrens, bzw. Vorrichtung im Falle optimaler Temperatur- und Verdampfungs-Klimaverhältnisse und bei Anwendung herkömmlicher Haushaltskühlschränke,
- **Fig.2**: eine mögliche Ausführungsform der erfindungsgemäßen Vorrichtung, schematisch im Längsschnitt,
- **Fig.3**: einen entlang der Linie A-A genommenen Schnitt der in Figur 2 veranschaulichten Vorrichtung,
- **Fig.4**: eine andere Ausführungsform der erfindungsgemäßen Vorrichtung im Teilschnitt, wobei die geschlossenen Räume der Doppelwände der Kammer und des Abschlußdeckels über ein flexibles Rohr miteinander verbunden sind,
- **Fig.5**: eine weitere Ausführungsform der erfindungsgemäßen Vorrichtung im Längsschnitt, die mit Schubfächern ausgebildet ist,
- **Fig.6**: einen entlang der gebrochenen Linie B-B genommenen Schnitt durch die Ausführungsform nach Figur 5.,
- **Fig.7**: eine Kammer einer weiteren erfindungsgemäßen Vorrichtung, bei welcher die Innenfläche des Abschlußdeckels der Kammer mit einem wärmeleitenden Material bedeckt ist,
- **Fig.8**: eine Ausführungsform der Außenseite der aus wärmeleitendem Material bestehenden Metallplatte des Abschlußdeckels,
- **Fig.9**: eine weitere Ausführungsform der Außenseite der Metallplatte,
- **Fig.10**: eine Ausführungsform der Metallplatte des Abschlußdeckels.

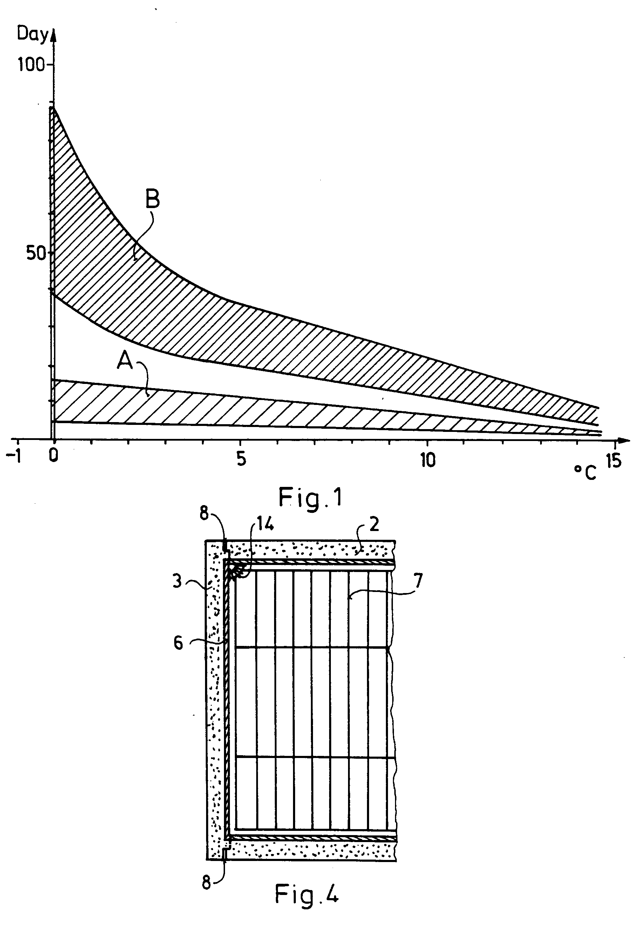

In Figur 1 sind die unter Anwendung des erfindungsgemäßen Verfahrens und die unter Anwendung herkömmlicher Haushaltskühlschränke erfolgenden Lagerungen miteinander verglichen, wobei die Figur - anhand durchgeführter Experimente -die Lagerungszeiten in Abhängigkeit von der Temperatur zeigt; dabei zeigt der mit A gekennzeichnete Bereich die für die herkömmliche Lösung charakteristischen Ergebnisse, während der mit B gekennzeichnete Bereich die für die erfindungsgemäße Lösung charakteristischen Ergebnisse enthält, wobei für beide Lösungen gleiche Qualitätsparameter berücksichtig wurden.

Aus Figur 1 geht eindeutig hervor, daß mit Anwendung des erfindungsgemäßen Verfahrens, bzw. der erfindungsgemäßen Vorrichtung die Lagerungszeit der zu lagernden Produkte bedeutend erhöht werden kann.

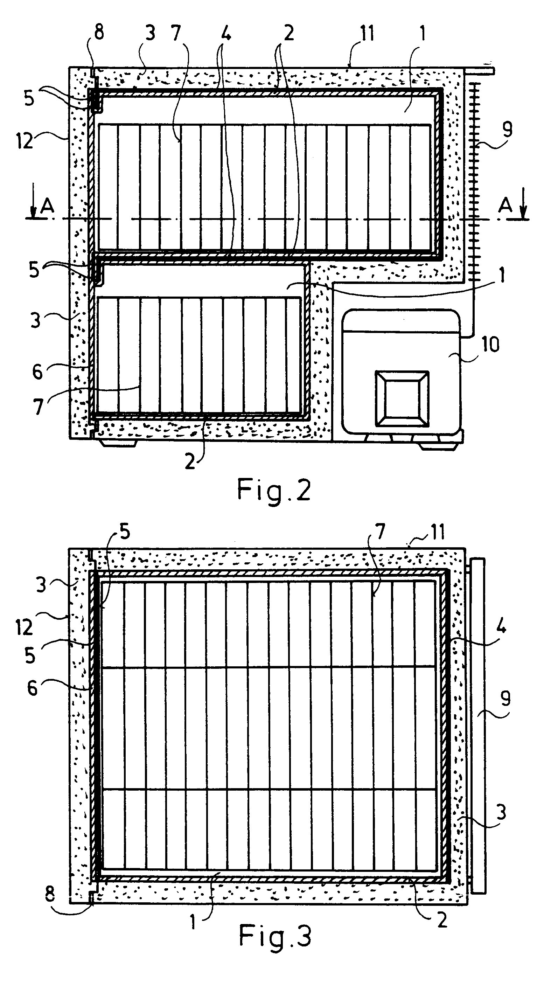

Bei einer beispielsweisen Ausführungsform der erfindungsgemäßen Vorrichtung - wie in den Figuren 2 und 3 dargestellt - ist die Vorichtung-im weiteren Kühlmaschine 11 - mit zwei Kammern 1 versehen, die mittels eines Abschlußdeckels 12 hermetisch verschließbar sind. In den Kammern 1 sind die zu lagernden Produkte in Fächern 7 angeordnet. Die Kammern 1 und der Abschlußdeckel 12 sind mit den die zu lagernden Produkte aufnehmenden Raum begrenzenden Doppelwänden versehen. Die Doppelwand des Abschlußdeckels 12 bildet einen zusammenhängenden geschlossenen Raum 6, die Doppelwand der Kammern 1 bildet ebenfalls einen zusammenhängenden geschlossenen Raum 2. Die geschlossenen Räume 2, 6 sind mit einer gekühlten frostbeständigen Flüssigkeit ausgefüllt. Die die Kammer 1 begrenzende Doppelwand ist in dem mit dem Abschlußdeckel 12 in geschlossenem Zustand in Berührung stehenden Bereich in eine zu dem Abschlußdeckel 12 parallele Ebene in Richtung zur Mitte der Kammer 1 abgebogen und ihre Außenwand ist mit einer wärmeleitenden Fläche 5 versehen, die im geschlossenen Zustand der Kammer 1 mit einer an der Innenwand der Doppelwand des Abschlußdeckels 12 ausschließlich an deren mit der Kammer 1 im geschlossenen Zustand in Kontakt stehenden Rand ausgebildeten wärmeleitenden Fläche 5 in Berührung steht. An den wärmeleitenden Flächen 5 schließen sich von außen Kühlplatten 4 an. Die Kühlplatten 4 Stellen über die wärmeleitenden Flächen 5 durch Wärmeleitung über die in den geschlossenen Räumen 2, 6 befindliche frostbeständige Flüssigkeit die gleiche Temperatur für die Innenwände des Abschlussdeckels 12 und die der Kammern 1 sicher. Die wärmeleitenden Flächen 5 stehen nirgendwo mit dem das zu lagernde Produkt aufnehmenden Innenraum in Berührung, da diese wärmeleitenden Flächen 5 von der Innenwand der Doppelwand der Kammern 1 in Richtung zum Innern der Kammern 1 abgedeckt sind. Zum Zwecke der Vermeidung von Wärmeverlusten ist die Schließfläche 8 des Abschlussdeckels 12 mit einer Isolierung versehen, die die Luftströmung und die Wärmeleitung zwischen Außen- und Innenraum beseitigt.

Bei der Kühlmaschine 11 wird der Kühlkreisprozeß von einem an sich bekannten Kompressor über einen aus den Kühlplatten 4 bestehenden Verdampfer und eine wärmeabgebende Fläche 9 aufrechterhalten. Eine gute Wärmespeicherung der lagernden Räume wird von einer Wärmeisolierung 3 Sichergestellt, die zwischen der Außenfläche der Kühlmaschine 11 und den Kühlplatten 4 bzw. dem mit der frostbeständigen Flüssigkeit gefüllten geschlossenen Raum 2, 6 angeordnet ist.

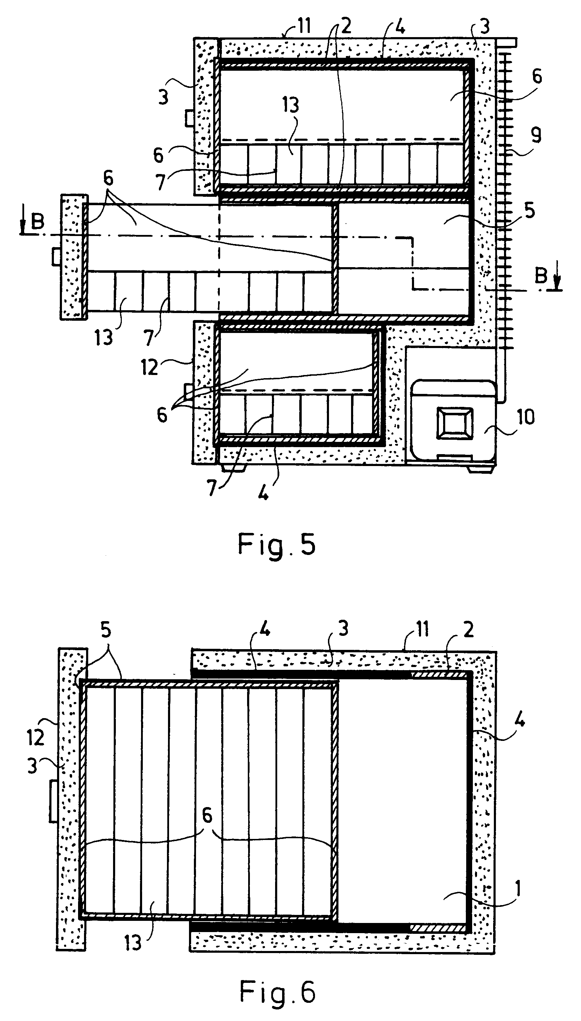

Die Wärmeisolierung 3, sowie die die geschlossenen Räume 2,6 umgebenden Doppelwände können auch aus durchsichtigem Material gefertigt werden, wobei die Wärmeisolation 3 ebenfalls eine Doppelwand sein kann, zwischen deren Innen- und Aussenwand Vakuum herrscht. Das Prinzipschema der Ausführungsform der erfindungsgemäßen Vorrichtung nach Figur 4 entspricht im Grunde dem der Vorrichtung nach Figur 3. Der Unterschied besteht darin, daß die Wärmeleitung zwischen dem Lagerungsraum und dem Abschlußdeckel durch Wärmekonvektion auf die Weise erfolgt, daß die geschlossenen Räume 2 und 6 durch flexible Rohre 14, gegebenenfalls mit einem Balg versehene Rohre miteinander verbunden sind und dadurch sich die Temperatur der in den beiden geschlossenen Räumen 2 und 6 befindlichen frostbeständigen Flüssigkeit ausgleichen kann.

Bei der in den Figuren 5 und 6 dargestellten Kühlmaschine 11 dienen die Schubfächer 13 zur Aufbewahrung der zu lagernden Produkte, wobei diese Schubfächer 13 mit dem Abschlußdeckel 12 gemeinsam aus der Kammer 1 herausziehbar oder in diese einschiebbar sind. Die Schubfächer 13 sind ebenfalls an ihren Seiten und unten von einer einen geschlossenen Raum 6 bildenden Doppelwand umgeben, wobei die Außenwand der Doppelwand mit einer wärmeleitenden Fläche 5 versehen ist, die im geschlossenen Zustand mit der Innenwand der Doppelwand der Kammer 1 in Berührung steht, wobei in dem von der Doppelwand der Kammer 1 umschlossenen geschlossenen Raum 2 eine gekühlte frostbeständige Flüssigkeit angeordnet ist. Die Außenwand der Doppelwand der Kammer 1 steht dagegen mit der Kühlplatte 4 in Berührung.

Diese Lösung ist aus zwei Aspekten besonders vorteilhaft. Einerseits muß bei der Herausnahme des gelagerten Produktes nicht der gesamte Lagerraum der Kühlmaschine 11 geöffnet werden, sondern nur das Schubfach 13 ist herauszuziehen, in welchem das gesuchte Produkt gelagert ist. Andererseits verursacht die Herausnahme des Produktes eine geringere Luftbewegung, wodurch die gleichmäßige Wärmespeicherung (die Einhaltung einer konstanten Temperatur) in den Lagerräumen der Produkte besser als bei der mit Abschlußdeckel 12 (Tür) verschließbaren Ausführungsform Sichergestellt werden kann.

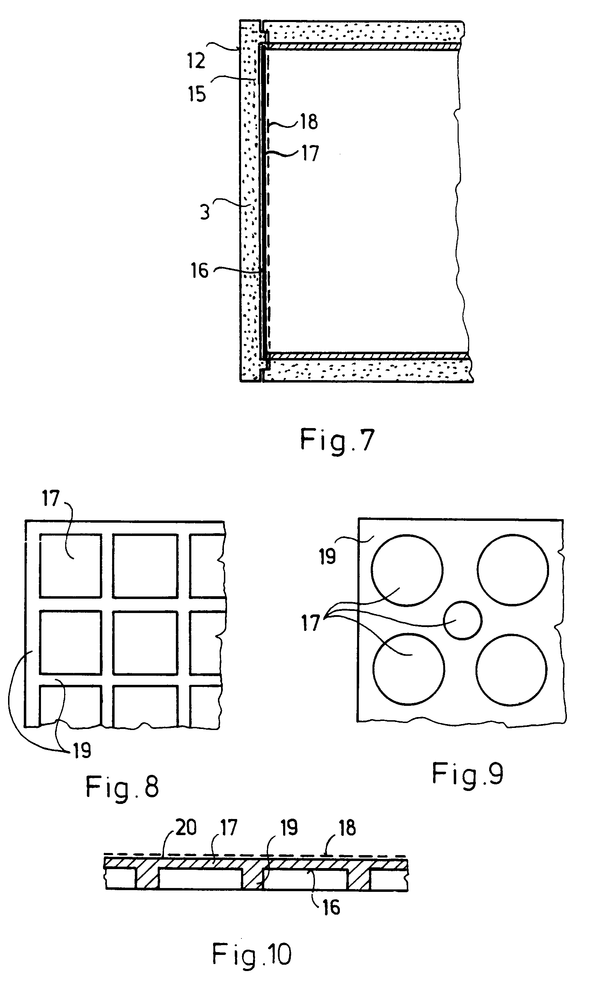

In den Figuren 7-10 ist eine Kammer einer anderen erfindungsgemäßen Vorrichtung zum Lagern von Lebensmitteln, Pflanzen, Fleisch und sonstigen organischen Stoffen dargestellt. Bei dieser Vorrichtung ist ebenfalls mindestens eine das zu lagernde Produkt aufnehmende und mittels eines zu öffnenden Abschlußdeckels 12 hermetisch abschließbare Kammer 1 vorgesehen, die jedoch im Unterschied zu der oben beschriebenen Vorrichtung derart ausgebildet ist, daß die Innenfläche 15 des Abschlußdeckels 12 zumindestens teilweise mit einem wärmeleitenden Material, zum Beispiel einer Metallplatte 17, vorzugsweise einer Kupfer- oder Aluminiumplatte bedeckt ist, deren Außenseite 16 mit einer Wärmeisolierung 3 versehen ist. Die die Kammer 1 begrenzenden weiteren Wände sind zumindestens teilweise als Doppelwände ausgebildet, die mit dem wärmeleitenden Material des Abschlußdekkels 12 in wärmeübertragender Verbindung stehen. Die von den Doppelwänden umschlossenen, geschlossenen, gekühlten zusammenhängenden Räume 2 sind mit einer zirkulierenden frostbeständigen Flüssigkeit gefüllt, wobei die Innenflächen der Doppelwände vorzugsweise aus Kunststoff sind. Die Innenseite 20 des wärmeleitenden Materials, d.h. die Innenseite der Metallplatte 17 ist mit einer Farbschicht oder dünnen Kunststoffschicht 18 bedeckt, während die Außenseite 16 der Metallplatte 17 mit Verdickungen 19, zum Beispiel Rippungen (Fig. 10) oder gitterförmig ausgebildeten Rippungen (Fig. 8) oder, wie aus Figur 9 ersichtlich, mit Verdickungen von ca. 5 mm versehen ist, die kreisförmige Unterbrechungen aufweisen wobei die Metallplatte 17 eine Dicke von ca. 0,5 mm aufweist. Diese Ausbildungen stellen eine bessere Wärmeleitung sicher. Nachstehend wird das erfindungsgemäße Verfahren anhand eines konkreten Durchführungsbeispieles näher erläutert.

Alle die Kammer begrenzenden Flächen (die aus einer Kunststoffplatte mit konstanter Wanddicke gefertigt sind) umgebenden geschlossenen Räume werden mit einer frostbeständigen Flüssigkeit gefüllt, dann wird die Flüssigzeit zu einem Verdampfer eines Kühlkreises geführt und auf -0,3 °C abgekühlt. Wenn nun die Flüssigzeit durch Gravitation oder mittels einer Pumpe in Zirkulation gebracht wird, nimmt sie von der die Kammer begrenzenden äußeren Fläche Wärme auf, sie erwärmt sich und kühlt die Wand der Kammer durch Wärmeentzug ab. Sobald die Temperatur der Flüssigzeit den Wert von +3 °C erreicht, wird mit Hilfe eines Thermostaten automatisch der Kühlkreis eingeschaltet und solange in Betrieb gehalten, bis die Temperatur wieder den Wert von -3 °C erreicht. Dann wird wieder mit Hilfe des Thermostates der Kühlkreis abgeschaltet. Dieser Prozeß wird sich zyklisch wiederholend fortgesetzt.

Die Temperatur der Innenfläche der zum Beispiel mit einer 3 mm dicken Kunststoffwand versehenen Kammer ändert sich dabei infolge der schlechten Wärmeleitfähigkeit während der Zykluszeit zwischen dem Ein- und dem Ausschalten des Thermostates abwechselnd zwischen +0,1 °C und -0,1 °C, wodurch die Temperatur des Innenraumes der Kammer ständig auf einen Wert von annähernd 0 °C gehalten werden kann.

Die Temperaturänderung des Innenraumes der Kammer hängt gemäß bekannter Gesetze der Physik von der Dicke der Kammerwand, den Wärmeleitungseigenschaften des Materials der Wand der Kammer, der Zykluszeit, der Temperaturänderung, der spezifischen Wärme und des Druckes des die die Kammer begrenzenden Flächen umgebenden Mediums, desweiteren von den Volumina der geschlossenen Räume, welche die die Kammer begrenzenden Flächen umgeben, und von der Wärmeisolierung der Außenwand des geschlossenen Raumes ab. Die einzelnen Parameter beeinflussen in folgender Weise die Temperaturänderung des Innenraumes der Kammer:

Die Temperaturänderung des Innenraumes der Kammer kann durch Erhöhung der Dicke der Kammerwand, durch Anwendung eines eine schlechtere Wärmeleitfähigkeit aufweisenden Materials für die Ausbildung der Kammerwand, durch Verringerung der Zykluszeit, durch Verringerung der Temperaturänderungen des Mediums, das die die Kammer begrenzenden Flächen umgibt, durch Anwendung eines die die Kammer begrenzenden Flächen umgebenden Materials (Mediums) mit geringerer spezifischer Wärme, durch Verringerung des Druckes des Mediums, das die die Kammer begrenzenden Flächen umgibt, durch Verringerung des Volumens des geschlossenen Raumes, der die die Kammer begrenzenden Flächen umgibt, sowie durch Verringerung der Wärmeisolierung der Außenwand des geschlossenen Raumes verringert werden.

Werden zum Beispiel die die Kammer begrenzenden Flächen mit einem Medium mit größerer spezifischer Wärme umgeben, so ist in diesem Falle der Thermostat derart einzustellen, daß er bei +0,1 °C den Kühlkreis einschaltet, bzw. bei -0,1 °C ausschaltet, um zu erreichen, daß die Temperatur des Innenraumes der Kammer ständig auf einem Wert von 0 °C bleibt.

Natürlich ist beim konstruieren der Kühlvorrichtungen darauf zu achten, daß die wichtigsten Parameter so ausgewählt werden, daß geringe Herstellungs- und Betriebskosten gesichert werden.

Zusammenfassend weist das erfindungsgemäße Verfahren bzw. die erfindungsgemäße Vorrichtung folgende Vorteile auf:
a./ Die Konservierungszeit der Lebensmittel pflanzlicher Herkunft, usw. kann auf ein Vielfaches der mit herkömmlichen Kühlmaschinen erreichbaren Konservierungszeit erhöht werden.
b./ Während der Konservierung (Lagerung) tritt keine Veränderung der Qualität, der Farbe, des Geschmackes, des Geruches, der Härte, usw. der gelagerten Produkte ein.
c./ Die Produkte bewahren auch bei freier Anordnung in dem Lagerraum der Kühlmaschine ihre ursprüngliche Qualität.
d./ Die in dem Lagerungsraum angeordneten Produkte können ohne schaden zu nehmen mit den Grenzflächen (den Innenwänden der Doppelwände) und miteinander in Berührung stehen, deshalb kann der Raum besser ausgenutzt werden, d.h. in einem gleichen Volumen können mehr Produkte zum Zwecke der Lagerung (Haltbarmachung) als bei den herkömmlichen Kühlmaschinen, bzw. Kühlräumen untergebracht werden.

## Patentansprüche

1. Verfahren zum Lagern von Lebensmitteln, Pflanzen, Fleisch und sonstigen organischen Stoffen, wobei das zu lagernde Produkt in eine hermetisch abschließbare gekühlte Kammer untergebracht wird, die geöffnet werden kann, **dadurch gekennzeichnet**, daß die geschlossene Kammer von außen von einer in einem geschlossenem Raum befindlichen frostbeständigen Flüssigkeit umgeben wird, wobei die Temperatur der frostbeständigen Flüssigkeit intermittierend oder kontinuierlich gemessen wird und die frostbeständige Flüssigkeit mittels eingefügtem Thermostat und Kühlkreis mit Hilfe einer außerhalb des geschlossenen Raumes angeordneten Kühlplatte zwischen vorgegebene Temperaturgrenzen gekühlt wird, wobei die Temperaturgrenzen in einem Bereich von +3 °C bis -3 °C liegen und die obere und die untere Temperaturgrenze in Abhängigkeit von der Dicke der Wand der Kammer, den Wärmeleitungseigenschaften des Materials der Wand der Kammer, der Zykluszeit zwischen dem Einschalten und dem Ausschalten des Kühlkreises, der Temperaturänderung und der spezifischen Wärme des die die Kammer begrenzenden Flächen umgebenden Mediums, dem Volumen des die die Kammer begrenzenden Flächen umgebenden geschlossenen Raumes, und der Wärmeisolierung der Außenwand des geschlossenen Raumes auf die Weise gewählt wird, daß jeder Teil der Innenfläche der Kammer auf einem in einem Temperaturbereich von +0,5 °C bis -0,5 °C liegenden, im Raum und in der Zeit konstanten Temperaturwert, vorzugsweise auf einem 0 °C annähernden Temperaturwert gehalten wird und die Temperatur der die geschlossene Kammer von außen umgebenden frostbeständigen Flüssigkeit und die Aussenfläche des geschlossenen Raumes auf einem Wert innerhalb der angegebenen Temperaturgrenzen gehalten wird, wobei die frostbeständige Flüssigkeit kontinuierlich oder intermittierend in dem geschlossenen Raum durch Gravitation oder mittels einer Pumpe um die Kammer in Zirkulations gebracht wird

2. Vorrichtung zum Lagern von Lebensmitteln, Pflanzen, Fleisch und sonstigen organischen Stoffen, die mindestens eine das zu lagernde Produkt aufnehmende, zu öffnende, mittels eines Abschlußdeckels hermetisch abschließbare, gekühlte Kammer aufweist, **dadurch gekennzeichnet,** daß die Kammer (1) und der Abschlußdeckel (12) durch Doppelwände begrenzt sind, wobei die Doppelwände der Kammer (1) und des Abschlußdeckels (12) jeweils gekühlte zusammenhängende geschlossene Räume (2, 6) umschließen, die miteinander in wärmeleitender Verbindung stehen, daß weiterhin die Innenwand/Innenwände der Doppelwand vorzugsweise aus Kunststoff gefertigt ist/sind, die Außenwand der Doppelwände dagegen von außen von einer Wärmeisolierung (3) umgeben ist, daß weiterhin die geschlossenen Räume (2, 6) mit einer zirkulierenden frostbeständigen Flüssigkeit gefüllt sind.

3. Vorrichtung nach Anspruch 2, **dadurch gekennzeichnet**, daß die Doppelwand der Kammer (1) und die Doppelwand des Abschlußdeckels (12) mit einer wärmeleitenden Fläche (5) versehen sind, die im geschlossenen Zustand miteinander in Berührung stehen und die von der Innenwand der Doppelwände in Richtung zu dem gelagerten Produkt abgedeckt sind.

4. Vorrichtung nach Anspruch 3, **dadurch gekennzeichnet,** daß die wärmeleitende Fläche (5) der Kammer (1) mit einer Kühlplatte (4) in wärmeleitender Verbindung steht.

5. Vorrichtung nach einem der Ansprüche 2 bis 4, **dadurch gekennzeichnet,** daß die von den Doppelwänden der Kammer (1) und des Abschlußdeckels (12) umschlossenen geschlossenen Räume (2, 6) über ein flexibles Rohr/flexible Rohre (14) miteinander in Verbindung stehen.

6. Vorrichtung nach einem der Ansprüche 2 bis 5, **dadurch gekennzeichnet,** daß die Kammer (1) mit dem Abschlußdeckel (12) gemeinsam heraausziehbare Schubfächer (13) aufweist, die von einer vorzugsweise ebenfalls geschlossene Räume (6) bildenden Doppelwand mindestens teilweise umgeben sind.

7. Vorrichtung nach einem der Ansprüche 2 bis 6, **dadurch gekennzeichnet,** daß eine Pumpe vorgesehen ist, die die in den durch die Doppelwände umschlossenen geschlossenen Räumen (2, 6) befindliche frostbeständige Flüssigkeit zirkulieren läßt.

8. Vorrichtung zum Lagern von Lebensmitteln, Pflanzen, Fleisch und sonstigen organischen Stoffen, die mindestens eine das zu lagernde Produkt aufnehmende, zu öffnende, mittels eines Abschlußdeckels hermetisch abschließbare, gekühlte Kammer aufweist, **dadurch gekennzeichnet,** daß die Innenfläche (15) des Abschlußdeckels (12) zumindest teilweise mit einem wärmeleitenden Material bedeckt ist, dessen Außenseite (16) mit einer Wärmeisolierung (3) versehen ist, während die die Kammer (1) begrenzenden weiteren Wände zumindestens teilweise Doppelwände sind, die mit dem wärmeleitenden Material des Abschlußdeckels (12) in wärmeübertragender Verbindung stehen, daß weiterhin der/die von den Doppelwänden umschlossene(n) Raum/Räume mit einer zirkulierenden frostbeständigen Flüssigkeit gefüllt ist/sind, wobei die Innenwand der Doppelwand vorzugsweise aus Kunststoff besteht.

9. Vorrichtung nach Anspruch 8, **dadurch gekennzeichnet,** daß das wärmeleitende Material des Abschlußdeckels (12) aus einer Metallplatte (17), vorzugsweise einer Kupferplatte oder Aluminiumplatte gebildet ist, deren Innenseite (20) mit einer Farbschicht oder dünnen Kunststoffschicht (18) bedeckt ist, während die Außenseite (16) der Metallplatte (17) mit Verdickungen (19), vorzugsweise Rippungen oder gitterförmig ausgebildeten Rippungen versehen ist.

## Claims

1. A process for the storage of foodstuffs, plants, meat and other organic materials, wherein the product to be stored is accommodated in a hermetically sealable cooled chamber which can be opened, **characterised in that** the closed chamber is surrounded on the outside with a freeze-resistant fluid disposed in a closed space, the temperature of the freeze-resistant fluid being intermittently or continuously measured and wherein the freeze-resistant fluid is cooled between predetermined temperature limits by means of an inserted thermostat and a cooling circuit with the aid of a cooler plate arranged externally of the closed space, wherein the predetermined temperature limits lie between +3°C and -3°C and the upper and lower temperature limits are selected in dependence on the thickness of the wall of the chamber, the cycle time between switching the cooling circuit on and off, the change in temperature and the specific heat of the medium surrounding the surfaces bounding the chamber, the volume of the closed space surrounding the surfaces bounding the chamber, and the heat insulation of the outer wall of the closed space in such a manner that each part of the internal surface of the chamber is held at a temperature value lying in a temperature range of +0.5°C to -0.5°C, preferably approximately at 0°C and the temperature of the freeze-resistant fluid outwardly surrounding the closed chamber and of the external surface of the closed space is held to a value within the above-given temperature limits, wherein the freeze-resistant fluid is brought continuously or intermittently into circulation in the closed space by gravity or by means of a pump.

2. Apparatus for the storage of foodstuffs, plants, meat or other organic materials, which has at least one operable chamber which is hermetically sealable by means of a closure lid and which accommodates the product to be stored, **characterised in that** the chamber (1) and the closure lid (12) are bounded by double walls, wherein the double walls of the chamber (1) and of the closure lid (12) respectively surround cooled continuous closed spaces (2, 6) which are in heat-communicating connection with each other, in that furthermore the internal wall or internal walls of the double wall is or are preferably made of synthetic material, the outer wall of the double walls being in contrast surrounded on the outside by a heat insulation (3), in that furthermore the closed spaces (2, 6) are filled with a circulating freeze-resistant fluid.

3. Apparatus according to claim 2, **characterised in that** the double wall of the chamber (1) and the double wall of the closure lid (12) are each provided with a heat-conducting surface (5) which in the closed state are in mutual contact and are covered by the inner wall of the double wall in the direction towards the stored product.

4. Apparatus according to claim 3, **characterised in that** the heat-conducting surface (5) of the chamber (1) is in heat-conducting connection with a cooling plate (4).

5. Apparatus according to any of claims 2 to 4, **characterised in that** the closed spaces (2, 6) surrounded by the double walls of the chamber (1) and of the closure lid (12) are connected together via a flexible pipe (14) or flexible pipes.

6. Apparatus according to any of claims 2 to 5, **characterised in that** the chamber (1) has drawers (13) which can be pulled out together with the closure lid (2) and which are surrounded by a double wall that preferably also forms closed spaces (6).

7. Apparatus according to any of claims 2 to 6, **characterised in that** there is provided a pump which causes the freeze-resistant fluid disposed in the spaces (2, 6) surrounded by the double walls to circulate.

8. Apparatus for the storage of foodstuffs, plants, meat and other organic materials which has at least one chamber operable which is hermetically sealable by means of closure lid and which accommodates the product to be stored, **characterised in that** the internal surface (15) of the closure lid (12) is at least partially covered with a heat-conducting material the outside (16) of which is provided with heat insulation (3), while the further walls bounding the chamber (1) are at least partially double walls in heat-transferring connection with the heat-conducting material of the closure lid (12), further in that the space or spaces surrounded by the double wall or the double walls is/are filled with circulating freeze-resistant fluid, while the inner wall of the double wall preferably consists of a synthetic material.

9. Apparatus according to claim 8, **characterised in that** the heat-conducting material of the closure lid (12) is formed from a metallic plate (17), preferably a copper plate or an aluminium plate the inner side (20) of which is covered with a paint layer or a thin plastics layer (18), while the outer side (16) of the metallic plat (17) is provided with thickened parts (19), preferably ribs or lattice-shaped ribs.

## Revendications

1. Procédé de stockage de denrées alimentaires, de plantes, de viande et d'autres substances organiques, le produit à stocker étant placé dans une chambre réfrigérée pouvant être fermée hermétiquement et pouvant être ouverte,
**caractérisé en ce que** la chambre fermée est entourée extérieurement d'un fluide incongelable contenu dans un espace fermé, la température du fluide incongelable étant mesurée de façon continue ou intermittente et le fluide incongelable étant refroidi entre des limites de température prédéterminées au moyen d'un thermostat incorporé et d'un circuit de refroidissement à l'aide d'une plaque de refroidissement disposée à l'extérieur de l'espace fermé, les limites de température étant situées à l'intérieur d'une plage allant de +3°C à -3°C et la limite supérieure et inférieure de température étant choisie en fonction de l'épaisseur de la paroi de la chambre, des propriétés de conductibilité thermique du matériau constituant la paroi de la chambre, de la durée du cycle entre la mise en marche et l'arrêt du circuit de refroidissement, de la variation de température et de la chaleur massique du milieu entourant les faces délimitant la chambre, du volume de l'espace fermé entourant les surfaces délimitant la chambre et de l'isolation thermique de la paroi extérieure de l'espace fermé, de façon que chaque partie de la surface intérieure de la chambre soit maintenue à une température située à l'intérieur d'une plage de températures allant de +0,5°C à -0,5°C, constante dans l'espace et dans le temps, de préférence approchant de 0°C, et que la température du fluide incongelable entourant extérieurement la chambre fermée et des surfaces extérieures de l'espace fermé soit maintenue à une valeur comprise entre les limites de températures indiquées, le liquide incongelable étant mis en circulation autour de la chambre de façon continue ou intermittente dans l'espace fermé, par gravitation ou au moyen d'une pompe.

2. Dispositif de stockage de denrées alimentaires, de plantes, de viande et d'autres substances organiques, comportant au moins une chambre réfrigérée recevant le produit à stocker pouvant être ouverte et pouvant être fermée hermétiquement au moyen d'un couvercle de fermeture, **caractérise en ce que** la chambre (1) et le couvercle de fermeture (12) sont délimités par des doubles parois, les doubles parois de la chambre (1) et du couvercle de fermeture (12) entourant chacune des espaces fermés (2, 6) réfrigérés, communicants, qui sont en liaison d'échange de chaleur les uns avec les autres, en ce que de plus la (les) paroi (s) intérieure (s) de la double paroi est (sont) de préférence réalisée (s) en matière plastique, la paroi extérieure des doubles parois est par contre recouverte extérieurement d'une isolation thermique (3), en ce que de plus les espaces fermés (2, 6) sont remplis d'un fluide incongelable en circulation.

3. Dispositif selon la revendication 2, **caractérisé en ce que** la double paroi de la chambre (1) et la double paroi du couvercle de fermeture (12) qui sont en contact à l'état fermé et qui sont recouvertes en direction du produit stocké par la paroi intérieure de la double paroi, sont pourvues d'une surface bonne conductrice de la chaleur (5).

4. Dispositif selon la revendication 3, **caractérisé en ce que** la surface bonne conductrice de la chaleur (5) de la chambre (1) est en liaison d'échange de chaleur avec une plaque réfrigérante (4).

5. Dispositif selon l'une quelconque des revendications 2 à 4, **caractérisé en ce que** les espaces fermés (2, 6) entourés par les doubles parois de la chambre (1) et du couvercle de fermeture (12) sont en liaison les uns avec les autres par l'intermédiaire d'un ou plusieurs tuyau (x) souple (s).

6. Dispositif selon l'une quelconque des revendications 2 à 5, **caractérisé en ce que** la chambre (1) présente en commun avec le couvercle de fermeture (12) des tiroirs extractibles (13) qui sont entourés au moins partiellement d'une double paroi formant de préférence également des espaces fermés (6).

7. Dispositif selon l'une quelconque des revendications 1 à 6, **caractérisé en ce qu**'il comprend une pompe qui fait circuler le fluide incongelable qui se trouve dans les espaces fermés (2, 6) entourés par les doubles parois.

8. Dispositif de stockage de denrées alimentaires, de plantes, de viande et d'autres substances organiques, comportant au moins une chambre réfrigérée recevant le produit à stocker, pouvant être ouverte et pouvant être fermée hermétiquement au moyen d'un couvercle de fermeture, **caractérisé en ce que** la surface intérieure (15) du couvercle de fermeture (12) est recouverte au moins partiellement d'un matériau bon conducteur de la chaleur dont la face extérieure (16) est pourvue d'une isolation thermique (3) alors que les autres parois délimitant la chambre (1) sont au moins partiellement des doubles parois qui sont en liaison d'échange de chaleur avec le matériau bon conducteur de chaleur du couvercle de fermeture (12), en ce que de plus l' (es) espace (s) entouré (s) par les doubles parois est (sont) rempli (s) d'un fluide incongelable en circulation, la paroi intérieure de la double paroi étant de préférence en matière plastique.

9. Dispositif selon la revendication 8, **caractérisé en ce que** le matériau bon conducteur de chaleur du couvercle (12) est formé d'une plaque métallique (17), de préférence d'une plaque de cuivre ou d'aluminium, dont la face intérieure (20) est recouverte d'une couche colorante ou d'une mince couche de matière plastique (18) alors que la face extérieure (16) de la plaque métallique (17) est pourvue de surépaisseurs (19), de préférence de nervures ou de nervures formant un quadrillage.
